# EUROPEAN PATENT APPLICATION

(11) **EP 4 567 158 A1**
(43) Date of publication of application: **11.06.2025**
(21) Application number: 23862683.2
(22) Date of filing: 27.02.2023
(51) Int. Cl.: C25B 9/00, C01B 3/02, C25B 1/042, C25B 9/23, C25B 9/67, C25B 15/00, C25B 15/021

(54) **HYDROGEN PRODUCTION SYSTEM AND METHOD FOR CONTROLLING HYDROGEN PRODUCTION SYSTEM**

(30) Priority: 09.09.2022 JP 2022143636
(71) Applicant: Mitsubishi Heavy Industries, Ltd., Tokyo 100-8332 (JP)
(72) Inventor: IWAI, Yasushi, Tokyo 100-8332 (JP); URASHITA, Yasutaka, Tokyo 100-8332 (JP); MATSUDA, Naohiko, Tokyo 100-8332 (JP); KOSAKA, Kenichiro, Tokyo 100-8332 (JP); IRIE, Hiroki, Tokyo 100-8332 (JP)
(74) Representative: Studio Torta S.p.A.
(86) International application number: PCT/JP2023/006936
(87) International publication number: WO 2024/053133

(57) **Abstract**

Provided is a hydrogen production system (100) including: an electrolysis module (19) that supplies steam to a hydrogen electrode (11) including a metal component and produces hydrogen through steam electrolysis; a hydrogen storage facility (40) that stores the generated hydrogen; a steam supply unit (20) that supplies steam to the hydrogen electrode (11); a regulation unit (50) that regulates a supply amount of the hydrogen supplied from the hydrogen storage facility (40) to the hydrogen electrode (11) and a supply amount of the steam supplied from the steam supply unit (20) to the hydrogen electrode (11); and a control device (80) for controlling the regulation unit (50) to switch a heating medium supply state in which a heating medium is supplied from a heating medium supply unit (70) to the hydrogen electrode (11) to a steam supply state in which steam is supplied from the steam supply unit (20) to the hydrogen electrode (11), in response to the electrolysis module (19) exceeding a first switching temperature when activating the electrolysis module (19).

## Description

### Technical Field

The present disclosure relates to a hydrogen production system and a method for controlling the hydrogen production system.

### Background Art

In the related art, a device for manufacturing hydrogen through steam electrolysis is known (for example, see Patent Document 1). Patent Document 1 relates to a device including a solid oxide electrolysis cell (SOEC), and discloses recovering reaction heat of a fuel cell, which generates electric power using hydrogen produced in the SOEC, in a heat storage device and heating steam to be supplied to the SOEC.

### Citation List

### Patent Literature

Patent Document 1: JP 2019-173082 A

### Summary of Invention

### Technical Problem

A hydrogen electrode of a cell stack of the SOEC includes a metal material having electron conductivity, for example, nickel (Ni). At high temperatures of 400°C or higher, most nickel is oxidized in an oxidizing atmosphere to become nickel oxide, and the cell stack may be damaged due to volume expansion. To prevent the hydrogen electrode from being oxidized at high temperatures of 400°C or higher, it is necessary to maintain the hydrogen electrode in a reducing atmosphere, and for example, a method of filling a system of the hydrogen electrode with an inert gas such as nitrogen gas may be considered. However, to this end, an inert gas supply facility and energy for manufacturing are required, leading to an increase in operation cost when producing hydrogen.

The present disclosure has been made in view of such circumstances, and an object of the present disclosure is to provide a hydrogen production system and a method for controlling the hydrogen production system capable of preventing a hydrogen electrode from being damaged without increasing an operation cost when producing hydrogen.

### Solution to Problem

In order to solve the above-described problem, the present disclosure employs the following means.

A hydrogen production system according to the present disclosure includes: an electrolysis module being an assembly of electrolysis cells including a hydrogen electrode, an oxygen electrode, and an electrolyte layer arranged between the hydrogen electrode and the oxygen electrode, the electrolysis module being configured to supply steam to the hydrogen electrode and produce hydrogen through steam electrolysis; a steam supply unit configured to supply the steam to the hydrogen electrode; a hydrogen supply unit configured to supply the hydrogen to the hydrogen electrode; a heating medium supply unit configured to supply a heating medium to the oxygen electrode; a heating medium system configured to supply the heating medium from the heating medium supply unit to the hydrogen electrode; and a hydrogen system configured to supply the hydrogen from the hydrogen supply unit to the oxygen electrode.

In a method for controlling a hydrogen production system, the hydrogen production system includes: an electrolysis module including a hydrogen electrode, an oxygen electrode, and an electrolyte layer arranged between the hydrogen electrode and the oxygen electrode, the electrolysis module being configured to supply steam to the hydrogen electrode and produce hydrogen through steam electrolysis; a steam supply unit configured to supply the steam to the hydrogen electrode; a hydrogen supply unit configured to supply the hydrogen to the hydrogen electrode; a heating medium supply unit configured to supply a heating medium to the oxygen electrode; a heating medium system configured to supply the heating medium from the heating medium supply unit to the hydrogen electrode; a hydrogen system configured to supply the hydrogen from the hydrogen supply unit to the oxygen electrode; and a regulation unit configured to regulate a supply amount of the hydrogen supplied from the hydrogen supply unit to the hydrogen electrode, a supply amount of the hydrogen supplied from the hydrogen supply unit to the oxygen electrode, a supply amount of the steam supplied from the steam supply unit to the hydrogen electrode, a supply amount of the heating medium supplied from the heating medium supply unit to the oxygen electrode, and a supply amount of the heating medium supplied from the heating medium supply unit to the hydrogen electrode, the method includes a first control step of, in response to the electrolysis module exceeding a first switching temperature when activating the electrolysis module, controlling the regulation unit to switch a state in which the heating medium is supplied from the heating medium supply unit to the hydrogen electrode and the steam is not supplied from the steam supply unit to the hydrogen electrode to a state in which the heating medium is not supplied from the heating medium supply unit to the hydrogen electrode and the steam is supplied from the steam supply unit to the hydrogen electrode.

### Advantageous Effects of Invention

According to the present disclosure, it is possible to provide a hydrogen production system and a method for controlling the hydrogen production system capable of preventing a hydrogen electrode from being damaged without increasing an operation cost of activating the hydrogen production system.

### Brief Description of Drawings

FIG. 1 is a diagram illustrating a schematic configuration of a hydrogen production system according to a first embodiment of the present disclosure.
FIG. 2 is a partial cross-sectional view illustrating an example of a cylindrical electrolysis module according to the first embodiment of the present disclosure.
FIG. 3 is a flowchart illustrating an operation during activation of the hydrogen production system.
FIG. 4 is a flowchart illustrating the operation during activation of the hydrogen production system.
FIG. 5 is a graph illustrating an example of a relationship among the elapsed time, the temperature of an electrolysis cell, and the gas concentration at the inlet of a base body tube (hydrogen electrode) during activation of the electrolysis module, and the temperature of the electrolysis cell and the timing of performing each control operation during the activation.
FIG. 6 is a flowchart illustrating an example of an operation of the hydrogen production system during stoppage.
FIG. 7 is a graph illustrating an example of a relationship among the elapsed time, the temperature of the electrolysis cell, and the gas concentration at the inlet of the base body tube (hydrogen electrode) during stoppage of the electrolysis module, and the temperature of the electrolysis cell and the timing of performing each control operation during the stoppage.
FIG. 8 is a diagram illustrating a schematic configuration of a hydrogen production system according to a second embodiment of the present disclosure.
FIG. 9 is a diagram illustrating a schematic configuration of a hydrogen production system according to a third embodiment of the present disclosure.

### Description of Embodiments

### First Embodiment

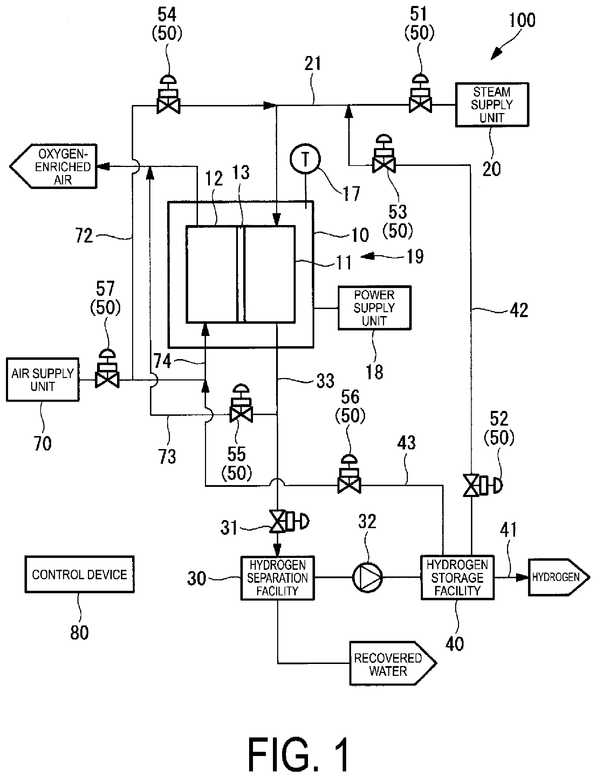

A hydrogen production system 100 according to a first embodiment of the present disclosure will be described below with reference to FIG. 1. FIG. 1 is a diagram illustrating a schematic configuration of a hydrogen production system 100 according to a first embodiment of the present disclosure. As illustrated in FIG. 1, the hydrogen production system 100 of the present embodiment includes an electrolysis module 19, a power supply unit 18, a steam supply unit 20, a hydrogen separation facility 30, a hydrogen storage facility (hydrogen supply unit) 40, a regulation unit 50, an air supply unit (heating medium supply unit) 70, and a control device 80. Note that although the present disclosure illustrates the system including the hydrogen storage facility (hydrogen supply unit), the hydrogen storage facility (hydrogen supply unit) 40 may be a hydrogen pipeline, and hydrogen may be taken out from the pipeline and supplied to the present system, or generated hydrogen may be directly supplied to the hydrogen pipeline.

A solid oxide electrolysis cell (hereinafter referred to as an electrolysis cell) 10 is an element constituting the electrolysis module 19 that supplies steam supplied from the steam supply unit 20 to a hydrogen electrode 11 and produces hydrogen and oxygen through steam electrolysis, and includes the hydrogen electrode 11, an oxygen electrode 12, and an electrolyte layer 13 arranged between the hydrogen electrode 11 and the oxygen electrode 12. The electrolysis module 19 is an assembly of electrolysis cells 10. Steam electrolysis is a reverse reaction of a fuel cell that generates power, and the electrolysis cell 10 can use substantially the same configuration and materials as those of a solid oxide fuel cell (SOFC).

FIG. 1 schematically illustrates the relationship among the electrolysis module 19, the electrolysis cell 10, the hydrogen electrode 11, the oxygen electrode 12, and the electrolyte layer 13. As the solid oxide electrolysis module 19 (hereinafter referred to as the electrolysis module 19), for example, a cylindrical cell stack can be used in which the hydrogen electrode 11 is arranged in a cylindrical tube body made of a porous material, the electrolyte layer 13 is arranged on the hydrogen electrode 11, and the oxygen electrode 12 is arranged on the electrolyte layer 13. The electrolysis module 19 also includes a temperature sensor 17 for measuring an operation temperature.

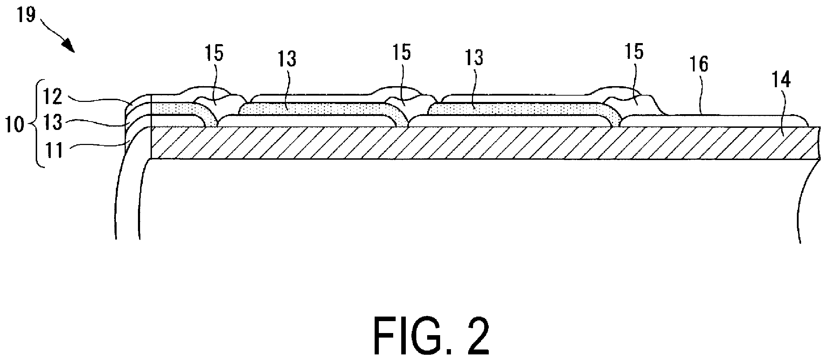

FIG. 2 is a partial cross-sectional view illustrating an example of the cylindrical electrolysis module 19 according to the present embodiment. As an example, the electrolysis module 19 is formed on a cylindrical base body tube 14 and a plurality of locations on an outer peripheral surface of the base body tube 14. An interconnector 15 is formed between the adjacent electrolysis modules 19. The electrolysis module 19 is formed by stacking the hydrogen electrode 11, the electrolyte layer 13, and the oxygen electrode 12 on the surface of the base body tube 14.

A lead film 16 electrically connected via the interconnector 15 to the oxygen electrode 12 of an electrolysis module 19 formed at one end of the outermost edge in an axial direction of the base body tube 14 among the plurality of electrolysis modules 19 formed on the outer peripheral surface of the base body tube 14 is provided, and a lead film 16 electrically connected to the hydrogen electrode 11 of an electrolysis module 19 formed at the other end of the outermost edge is provided. Note that, in the following description, "supplying a medium (air, steam, hydrogen, or the like) to the hydrogen electrode 11" refers to supplying the medium to the hydrogen electrode 11, which is formed on the outer peripheral surface of the base body tube 14, by causing the medium to flow through an inner space of the base body tube 14 and diffuse into pores of the base body tube 14.

The base body tube 14 is made of a porous material and includes, for example, CaO-stabilized ZrO₂ (CSZ), a mixture of CSZ and nickel oxide (NiO) (CSZ + NiO), Y₂O₃-stabilized ZrO₂ (YSZ), MgAl₂O₄, or the like as a main component. The base body tube 14 supports the electrolysis module 19, the interconnector 15, and the lead film 16, and diffuses the steam supplied to an inner peripheral surface of the base body tube 14 to the hydrogen electrode 11 formed on the outer peripheral surface of the base body tube 14 through the pores of the base body tube 14.

The hydrogen electrode 11 is made of an oxide of a composite material of a metal material (for example, Ni or the like) and a zirconia-based electrolyte material, and for example, Ni/YSZ is used. The oxygen electrode 12 is made of, for example, LaSrMnO₃-based oxide or LaCoO₃-based oxide. As the electrolyte layer 13, YSZ is mainly used which has gas tightness and high oxygen ion conductivity at high temperatures.

The interconnector 15 is made of, for example, a conductive perovskite-type oxide represented by M₁₋ₓLₓTiO₃ (M is an alkaline earth metal element, and L is a lanthanoid element) such as SrTiO₃-based oxide. The interconnector 15 is in the form of a dense film so that steam and air (oxidizing gas) do not mix.

In addition, the interconnector 15 has stable durability and electrical conductivity in both an oxidizing atmosphere and a reducing atmosphere. The interconnector 15 electrically connects the oxygen electrode 12 of one electrolysis module 19 and the hydrogen electrode 11 of the other electrolysis module 19 in the adjacent electrolysis modules 19, and connects the adjacent electrolysis modules 19 in series.

The lead film 16 has electron conductivity and is made of a composite material of Ni and a zirconia-based electrolyte material, such as Ni/YSZ, or M₁₋ₓLₓTiO₃ such as SrTiO₃-based material (M is an alkaline earth metal and L is a lanthanoid element). The lead film 16 supplies DC power to the plurality of electrolysis modules 19 connected in series through the interconnector 15.

When power is supplied from the outside between the hydrogen electrode 11 and the oxygen electrode 12 via the lead film 16, part of the high-temperature steam supplied to the hydrogen electrode 11 accepts electrons, separates into hydrogen and oxygen ions, and produces hydrogen. The separated oxygen ions migrate inside the electrolyte layer 13 to the oxygen electrode 12, release electrons, and produce oxygen.

The temperature sensor 17 is a sensor that detects a temperature of the electrolysis module 19 (a temperature of the electrolysis cell 10 itself or an ambient temperature of the space in which the electrolysis cell 10 is arranged). The temperature of the electrolysis module 19 detected by the temperature sensor 17 is transmitted to the control device 80.

The power supply unit 18 is a device that supplies power for performing steam electrolysis to the electrolysis module 19. A state of power supply from the power supply unit 18 to the electrolysis module 19 is controlled by the control device 80.

The steam supply unit 20 is a device that produces steam and supplies the steam to the electrolysis module 19. The steam is supplied to the hydrogen electrode 11 of the electrolysis module 19 through a steam supply pipe 21. The temperature of the hydrogen electrode inlet gas supplied to the hydrogen electrode 11 is, for example, 400°C or higher.

The hydrogen separation facility 30 is a facility that separates hydrogen from the mixed gas of hydrogen and steam produced at the hydrogen electrode 11 of the electrolysis module 19. When a hydrogen supply valve 31 is opened, hydrogen produced at the hydrogen electrode 11 is supplied to the hydrogen separation facility 30 via a hydrogen discharge pipe 33. The hydrogen separated by the hydrogen separation facility 30 is supplied to the hydrogen storage facility 40 by a hydrogen booster 32. The hydrogen separation facility 30 cools the mixed gas of hydrogen and steam supplied from the hydrogen discharge pipe 33, for example, and condenses the steam contained in the mixed gas to recover it as recovered water.

The hydrogen storage facility 40 is a facility that stores hydrogen generated by the electrolysis module 19 and supplies hydrogen to a hydrogen supply destination via a hydrogen supply pipe 41. In addition, the hydrogen storage facility 40 can supply hydrogen to the hydrogen electrode 11 via a hydrogen supply pipe 42 and the steam supply pipe 21. Additionally, the hydrogen storage facility 40 can supply hydrogen to the oxygen electrode 12 of the electrolysis module 19 via a hydrogen supply pipe (hydrogen system) 43. The hydrogen supplied from the hydrogen storage facility 40 to the hydrogen electrode 11 is preferably heated in the process of flowing through the hydrogen supply pipe 42 and supplied to the steam supply pipe 21 in order to maintain the hydrogen electrode 11 at a desired temperature.

The regulation unit 50 is a device that regulates a supply amount of steam supplied from the steam supply unit 20, a supply amount of hydrogen supplied from the hydrogen storage facility 40 to the hydrogen electrode 11, a supply amount of hydrogen supplied from the hydrogen storage facility 40 to the oxygen electrode 12, a supply amount of air supplied from the air supply unit 70 to the oxygen electrode 12, and a supply amount of air supplied from the air supply unit 70 to the hydrogen electrode 11.

The regulation unit 50 includes a steam regulator valve 51 arranged in the steam supply pipe 21, a hydrogen regulator valve 52 arranged in the hydrogen supply pipe 42, a hydrogen regulator valve (or gate valve) 53 arranged at a position close to the steam supply pipe 21 on a downstream side of the hydrogen supply pipe 42, an air regulator valve 54 arranged in an air supply pipe 72, an air-side discharge amount regulator valve 55 for hydrogen electrode vent gas arranged in an air discharge pipe 73, a hydrogen supply valve 56, and an air regulator valve 57.

The hydrogen regulator valve 53 is a valve that is closed when steam is supplied to the hydrogen electrode but hydrogen is not supplied. By closing the hydrogen regulator valve 53, it is possible to prevent steam from entering the hydrogen supply pipe 42 when steam is supplied to the hydrogen electrode but hydrogen is not supplied.

The hydrogen supply valve 56 is a valve that regulates a supply amount of hydrogen supplied from the hydrogen storage facility 40 to the oxygen electrode 12 via the hydrogen supply pipe 43 and the air supply pipe 74. The hydrogen supplied to the air supply pipe 74 is supplied to the oxygen electrode 12 side of the electrolysis module 19. The hydrogen supplied to the oxygen electrode 12 of the electrolysis module 19 and the oxygen electrode 12 side of the base body tube 14 is combusted through catalysis to raise the temperature of the electrolysis module 19.

In the hydrogen production system 100 illustrated in FIG. 1, hydrogen stored in the hydrogen storage facility 40 is supplied to the oxygen electrode 12 and the oxygen electrode 12 side of the base body tube 14 by opening the hydrogen supply valve 56, but another mode may also be employed. For example, a fuel supply unit (not illustrated) that supplies hydrogen or another fuel gas (methane gas or the like) may be provided, and the fuel gas may be supplied from the fuel supply unit to the oxygen electrode 12 side of the electrolysis module 19 and combusted through catalysis.

The air supply unit 70 is a device that supplies air heated to a high temperature (for example, lower than 400°C) to the oxygen electrode 12 and the hydrogen electrode 11. The supply amount of air supplied from the air supply unit 70 to the oxygen electrode 12 and the hydrogen electrode 11 is regulated by the air regulator valve 57. The supply amount of air supplied from the air supply unit 70 to the hydrogen electrode 11 is regulated by the air regulator valve 54.

The control device 80 is a device that controls the hydrogen production system 100. The control device 80 includes a storage unit (not illustrated) that stores a control program and a computation unit (not illustrated) that executes the program, and executes various operations for controlling the hydrogen production system 100 by executing the program read from the storage unit by the computation unit.

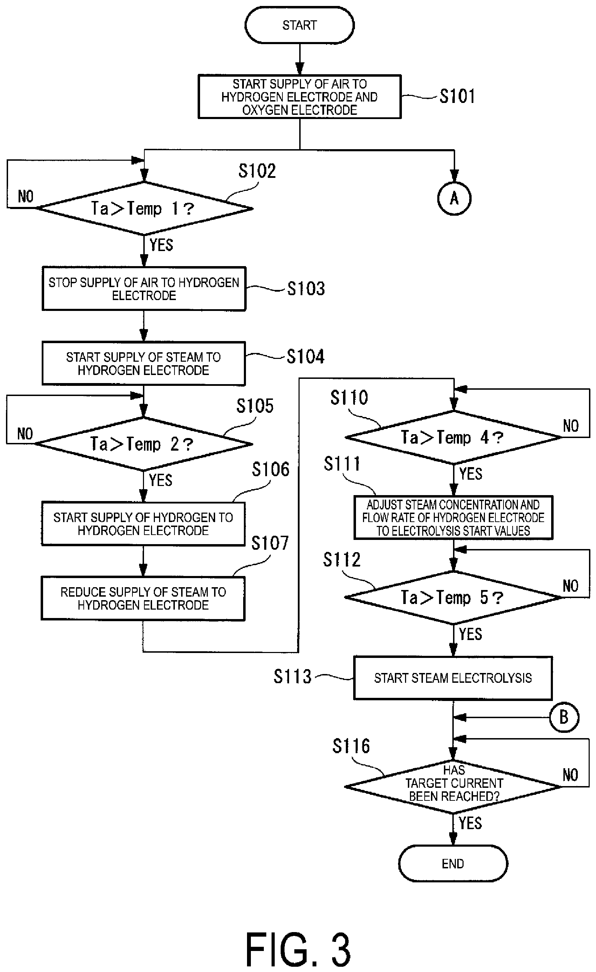

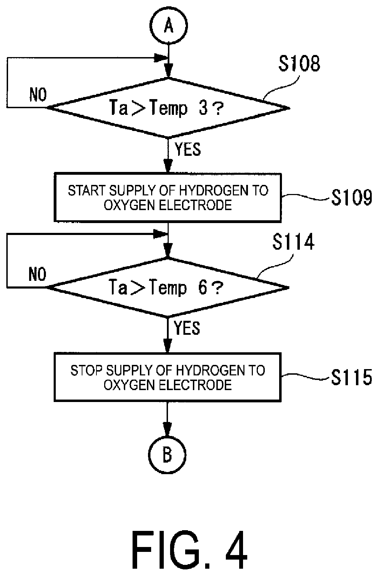

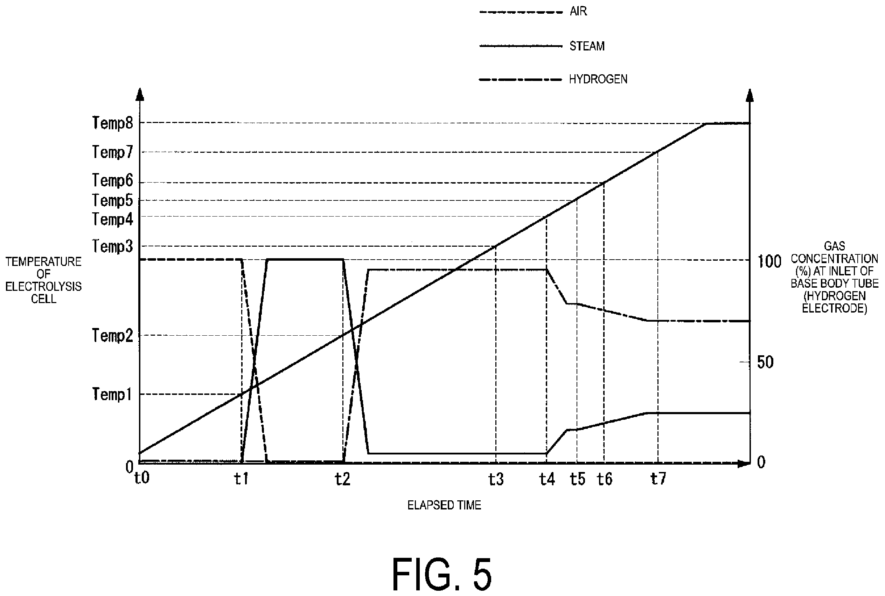

Next, a control operation that is executed by the control device 80 of the present embodiment during activation of the electrolysis module 19 will be described. FIGS. 3 and 4 are flowcharts illustrating a control operation during activation of the hydrogen production system 100. FIG. 5 is a graph illustrating an example of a relationship between the temperature of the electrolysis module 19 and the gas concentration at the inlet of the base body tube 14 (hydrogen electrode 11) during activation of the electrolysis module 19, and the temperature of the electrolysis module 19 and the timing of performing each control operation during the activation.

In step S101, the control device 80 controls to start the supply of air into the base body tube 14 (hydrogen electrode 11) and the oxygen electrode 12. The control device 80 controls the regulation unit 50 to open the air regulator valve 54 and the air-side discharge amount regulator valve 55 and close the steam regulator valve 51, the hydrogen regulator valve 52, and the hydrogen regulator valve (or gate valve) 53. In addition, the control device 80 performs control such that the air regulator valve 57 is in the open state and the hydrogen supply valve 31 and the hydrogen supply valve 56 are in the closed state.

The air supplied from the air supply unit 70 to the oxygen electrode 12 heats the oxygen electrode 12, heats the entire electrolysis module 19 and the base body tube 14, and is discharged to the outside. The air supply pipe (heating medium supply system) 72 is a system that supplies air from the air supply unit 70 to the hydrogen electrode 11. The air supplied from the air supply unit 70 into the base body tube 14 via the air supply pipe 72 heats the base body tube 14, heats the entire electrolysis module 19 including the hydrogen electrode 11, and is discharged to the outside via the air discharge pipe 73.

In step S102, the control device 80 determines whether a temperature Ta of the electrolysis module 19 detected by the temperature sensor 17 exceeds Temp1 (first switching temperature), and advances the process to step S103 in response to the temperature Ta exceeding Temp1. Temp1 is set to a temperature higher than a dew point of steam at the hydrogen electrode 11 so that the steam does not condense into drain water internally. Temp1 is a temperature of, for example, 150°C or higher and 200°C or lower. Temp2 described below is set to a temperature higher than Temp1.

As illustrated in FIG. 5, when activation of the hydrogen production system 100 is started at time t0, the temperature of the electrolysis module 19 gradually increases. The time at which the temperature of the electrolysis module 19 reaches Temp1 is defined as time t1. As illustrated in FIG. 5, the gas concentration at the inlet of the base body tube 14 is maintained at 100% air from the start of the activation of the hydrogen production system 100 until time t1.

In step S103, the control device 80 starts a closing operation of the air regulator valve 54 from the open state so as to stop the supply of air from the air supply unit 70 into the base body tube 14 (hydrogen electrode 11).

Subsequently, in step S104, the control device 80 starts an opening operation of the steam regulator valve 51 from the closed state so as to start the supply of steam from the steam supply unit 20 to the hydrogen electrode 11.

As described above, when the temperature Ta of the electrolysis module 19 exceeds Temp1 during activation of the hydrogen production system 100, the control device 80 controls the regulation unit 50 to shift from a state (heated air supply state) in which air is supplied from the air supply unit 70 into the base body tube 14 and steam is not supplied from the steam supply unit 20 into the base body tube 14 to a state (steam supply state) in which air is not supplied into the base body tube 14 and steam is supplied from the steam supply unit 20, thereby completing oxygen purging on the hydrogen electrode 11 side (second control step).

In step S105, the control device 80 determines whether the temperature Ta of the electrolysis module 19 detected by the temperature sensor 17 exceeds Temp2 (second switching temperature), and advances the process to step S107 when the temperature Ta exceeds Temp2. Temp2 is a temperature lower than a temperature at which a metal component included in the hydrogen electrode 11 is oxidized. Temp2 is a temperature of, for example, 350°C or higher and 400°C or lower. Temp2 is set to be lower than a temperature at which a rate at which a metal component included in the hydrogen electrode 11 reacts with steam and is oxidized considerably increases.

As illustrated in FIG. 5, when the supply of steam to the electrolysis module 19 is started at time t1, the temperature of the electrolysis module 19 gradually increases due to the air on the oxygen electrode 12 side and the high-temperature steam in the base body tube 14. The time at which the temperature of the electrolysis module 19 reaches Temp2 is defined as time t2. As illustrated in FIG. 5, the supply of steam is started after time t1 to reduce the oxygen concentration in the air at the inlet of the hydrogen electrode 11 to 0% and to increase the steam concentration to 100%. Thereafter, until time t2, the gas concentration at the inlet of the base body tube 14 (hydrogen electrode 11) is maintained at 100% steam.

In step S106, the control device 80 starts the supply of hydrogen from the hydrogen storage facility 40 into the base body tube 14 (hydrogen electrode 11), and starts an opening operation of the hydrogen regulator valve 52 and the hydrogen regulator valve (or gate valve) 53 from the closed state so that the hydrogen concentration at the inlet of the base body tube 14 becomes a predetermined value.

Subsequently, in step S107, the control device 80 reduces the supply of steam from the steam supply unit 20 into the base body tube 14 (hydrogen electrode 11), and closes the steam regulator valve 51 from the open state so that the steam concentration at the inlet of the base body tube 14 becomes a predetermined value.

As described above, when the temperature Ta of the electrolysis module 19 exceeds Temp2 during activation of the hydrogen production system 100, the control device 80 controls the regulation unit 50 to switch from the steam supply state to a state in which hydrogen, a reducing gas, is mixed (third control step). Since the hydrogen electrode 11 is maintained in a reducing state by switching from the steam supply state to the state in which hydrogen, a reducing gas, is mixed, steam oxidation of the hydrogen electrode by oxygen contained in the steam is prevented.

In step S108, the control device 80 determines whether the temperature Ta of the electrolysis module 19 detected by the temperature sensor 17 exceeds Temp3, and advances the process to step S109 when the temperature Ta exceeds Temp3. Temp3 is a temperature of, for example, 400°C or higher and 500°C or lower. Here, the time at which the temperature Ta of the electrolysis module 19 reaches Temp3 is defined as time t3.

In step S109, the control device 80 switches the hydrogen supply valve 56 from the closed state to the open state so as to start the supply of hydrogen from the hydrogen storage facility 40 to the oxygen electrode 12. The hydrogen supplied to the oxygen electrode 12 of the electrolysis module 19 is combusted through catalysis of the oxygen electrode 12 to raise the temperature of the oxygen electrode 12 side of the electrolysis module 19.

In step S110, the control device 80 determines whether the temperature Ta of the electrolysis module 19 detected by the temperature sensor 17 exceeds Temp4, and advances the process to step S111 when the temperature Ta exceeds Temp4. Temp4 is a temperature higher than a temperature at which the electrolysis module 19 can produce hydrogen through steam electrolysis, and is, for example, a temperature of 600°C or higher and 700°C or lower. Here, the time at which the temperature Ta of the electrolysis module 19 reaches Temp4 is defined as time t4.

In step S111, the control device 80 increases the supply amount of steam from the steam supply unit 20 to the hydrogen electrode 11 so as to meet an electrolysis start condition. The control device 80 regulates a valve opening degree of the steam regulator valve 51 and also regulates an opening degree of the hydrogen regulator valve 52, which controls the supply amount of hydrogen from the hydrogen storage facility 40 to the hydrogen electrode 11, to ensure that the hydrogen concentration at the inlet of the base body tube 14 (hydrogen electrode 11) meets the electrolysis start condition.

In step S112, the control device 80 determines whether the temperature Ta of the electrolysis module 19 exceeds TempS, whether the hydrogen concentration at the inlet of the base body tube 14 (hydrogen electrode 11) and the amount of supplied steam meet the electrolysis start conditions, and whether the power supply is ready to start, and when all the conditions are satisfied, the control device 80 advances the process to step S113.

In step S113, the control device 80 starts the supply of power from the power supply unit 18 to the electrolysis module 19 and controls the power supply unit 18 to gradually increase an amount of current. The electrolysis module 19 to which power is supplied from the power supply unit 18 starts production of hydrogen and oxygen through steam electrolysis. In step S113, the time at which power supply to the electrolysis module 19 is started is defined as time t5. After time t5, the valve opening degree of the steam regulator valve 51 is regulated to control the supply amount of steam to the hydrogen electrode 11, and the opening degree of the hydrogen regulator valve 52 is regulated to control the hydrogen concentration at the inlet of the base body tube 14 (hydrogen electrode 11).

In step S114, the control device 80 determines whether the temperature Ta of the electrolysis module 19 detected by the temperature sensor 17 exceeds Temp6, or whether the amount of current supplied to the electrolysis module 19 exceeds a predetermined value, and when either condition is satisfied, the control device 80 advances the process to step S115. Temp6 is a temperature of, for example, 650°C or higher and 750°C or lower. Here, the time at which the determination condition is satisfied is defined as time t6.

Thereafter, in step S116, it is determined whether the amount of current supplied to the electrolysis module 19 has reached a rated value, and when it is determined to be YES, the activation is completed at that point in time, and the electrolysis module 19 enters a rated operation state. Here, the time at which the rated current is reached is defined as time t7. Note that before the amount of current reaches the rated value, the control device 80 controls the steam regulator valve 51 and the hydrogen regulator valve 52 so that the supply amount of steam to the hydrogen electrode 11 and the hydrogen concentration at the inlet of the base body tube 14 (hydrogen electrode 11) become rated conditions. Here, the opening degrees of the steam regulator valve 51 and the hydrogen regulator valve 52 may be controlled by a function of the amount of current.

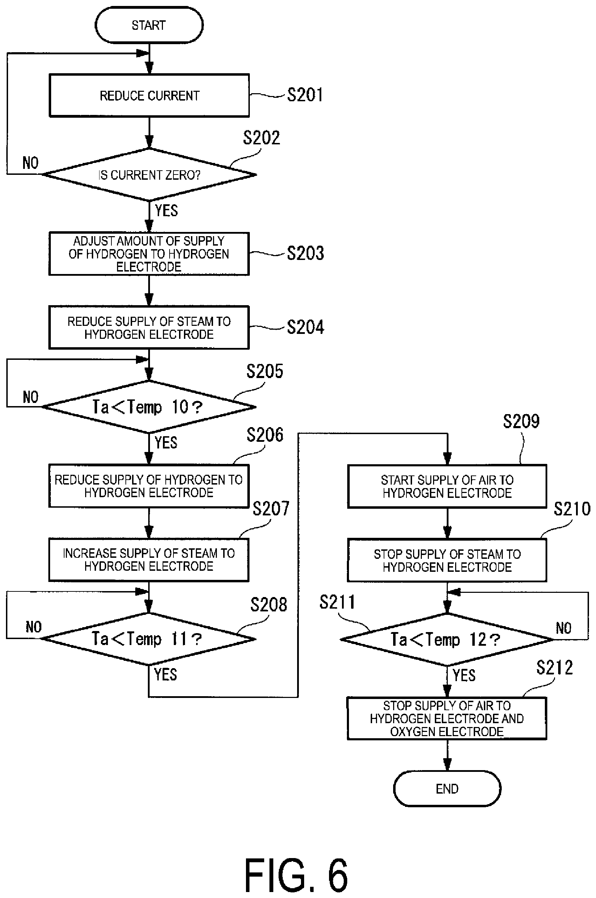

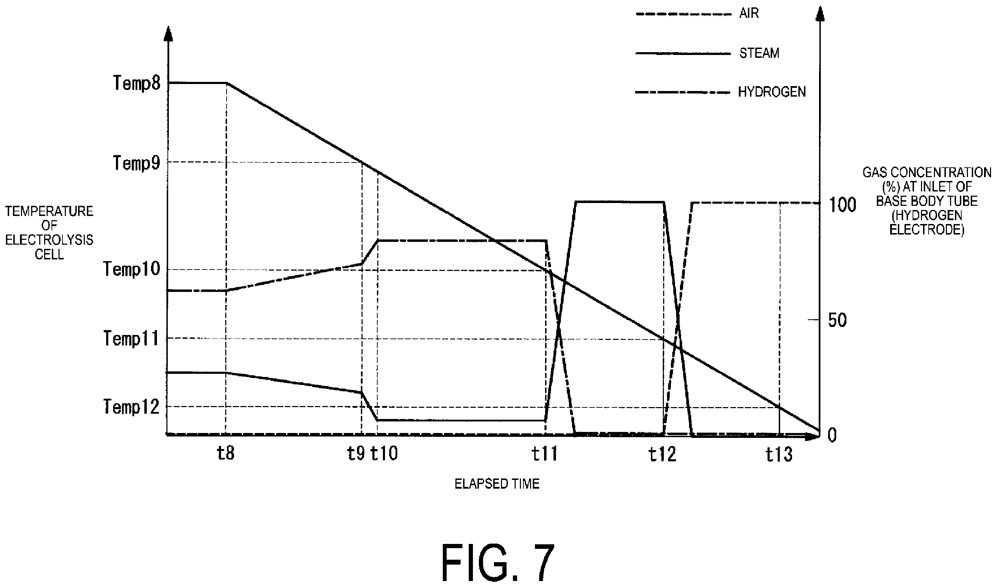

Next, an operation that is executed by the control device 80 of the present embodiment during stoppage of the electrolysis module 19 will be described. FIG. 6 is a flowchart illustrating an example of an operation of the hydrogen production system during stoppage. FIG. 7 is a graph illustrating an example of a relationship between the elapsed time and the gas concentration at the inlet of the base body tube 14 (hydrogen electrode 11), and the temperature of the electrolysis module 19 and the timing of performing each control operation, during stoppage of the electrolysis module 19.

In step S201, the control device 80 controls the power supply unit 18 to reduce the current to stop supplying power from the power supply unit 18 to the electrolysis module 19.

In step S202, the control device 80 determines whether the current has stopped, and advances the process to step S203 when the current becomes zero (0).

In step S203, the control device 80 starts adjusting the supply amount of hydrogen from the hydrogen storage facility 40 into the base body tube 14 (hydrogen electrode 11), and starts operating the hydrogen regulator valve 52 so as to set the hydrogen concentration to a predetermined value so that the inlet of the base body tube 14 becomes a reducing atmosphere.

Subsequently, in step S204, the control device 80 reduces the supply of steam from the steam supply unit 20 into the base body tube 14 (hydrogen electrode 11), and closes the steam regulator valve 51 so that the steam concentration at the inlet of the base body tube 14 becomes a predetermined value.

In step S205, the control device 80 determines whether the temperature Ta of the electrolysis module 19 detected by the temperature sensor 17 falls below Temp10 (fifth switching temperature), and advances the process to step S206 in response to the temperature Ta falling below Temp10. Temp10 is a temperature of, for example, 350°C or higher and 400°C or lower. Temp10 is set to be lower than a temperature at which a metal component included in the hydrogen electrode 11 reacts with steam and is oxidized.

As illustrated in FIG. 7, the stopping operation of the electrolysis module 19 is started at time t8, and the time at which the electrolysis current becomes zero (0) is defined as t9. From time t9, the opening degree of the hydrogen regulator valve 52 is regulated to start adjusting the inlet gas in the base body tube 14 (hydrogen electrode 11) to a reducing atmosphere, the supply of steam from the steam supply unit 20 into the base body tube 14 (hydrogen electrode 11) is reduced, and the steam regulator valve 51 is closed so that the steam concentration at the inlet of the base body tube 14 becomes a predetermined value.

The time at which the steam concentration at the inlet of the base body tube 14 becomes a predetermined value and adjustment to the reducing atmosphere is completed is defined as time t10. Since the electrolysis current gradually decreases in the period from time t8 to time t9 and the electrolysis current does not flow after t9, the heat generated by the Joule's heat of the electrolysis current decreases and disappears, and the temperature Ta of the electrolysis module 19 gradually decreases. The time at which the temperature Ta of the electrolysis module 19 reaches Temp10 is defined as time t11 (see FIG. 7).

In step S206, the control device 80 switches the hydrogen regulator valve 52 and the hydrogen regulator valve (or gate valve) 53 from the open state to the closed state so as to reduce and stop the supply of hydrogen from the hydrogen storage facility 40 to the hydrogen electrode 11.

Subsequently, in step S207, the control device 80 opens the steam regulator valve 51 so as to increase the supply of steam from the steam supply unit 20 to the hydrogen electrode 11.

As described above, the control device 80, in response to the temperature Ta of the electrolysis module 19 falling below Temp10 when stopping the electrolysis module 19, controls the regulation unit 50 to switch the state (hydrogen supply state) in which hydrogen is supplied from the hydrogen storage facility 40 to the hydrogen electrode 11 and steam is supplied from the steam supply unit 20 to the hydrogen electrode 11 within a range in which a reducing atmosphere is maintained to the state (steam supply state) in which hydrogen is not supplied from the hydrogen storage facility 40 to the hydrogen electrode 11 and steam is supplied from the steam supply unit 20 to the hydrogen electrode 11 (fifth control step).

As illustrated in FIG. 7, after time t11, the hydrogen concentration at the inlet of the hydrogen electrode 11 decreases, and the steam concentration at the inlet of the hydrogen electrode 11 increases accordingly, so that the hydrogen concentration becomes 0% and the steam concentration becomes 100%. The electrolysis module 19 is cooled by the gas flowing through the base body tube 14 (hydrogen electrode 11) and the oxygen electrode 12, the temperature Ta gradually decreases, and the time at which the temperature Ta reaches Temp11 is defined as t12 (see FIG. 7).

In step S208, the control device 80 determines whether the temperature Ta of the electrolysis module 19 detected by the temperature sensor 17 falls below Temp11 (sixth switching temperature), and advances the process to step S209 in response to the temperature Ta falling below Temp11. Temp11 is a temperature higher than the dew point of steam at the hydrogen electrode 11. Temp11 is a temperature of, for example, 150°C or higher and 200°C or lower.

In step S209, the control device 80 switches the air-side discharge amount regulator valve 55 from the closed state to the open state, switches the hydrogen supply valve 31 from the open state to the closed state, and switches the air regulator valve 54 from the closed state to the open state so as to start the supply of air from the air supply unit 70 to the hydrogen electrode 11.

In step S210, the control device 80 switches the steam regulator valve 51 from the open state to the closed state so as to stop the supply of steam from the steam supply unit 20 to the hydrogen electrode 11.

As described above, the control device 80, in response to the temperature Ta of the electrolysis module 19 falling below Temp11 when stopping the electrolysis module 19, controls the regulation unit 50 to switch the state (steam supply state) in which air is not supplied from the air supply unit 70 to the hydrogen electrode 11 and steam is supplied from the steam supply unit 20 to the hydrogen electrode 11 to the state (heating medium supply state) in which air is supplied from the air supply unit 70 to the hydrogen electrode 11 and steam is not supplied from the steam supply unit 20 to the hydrogen electrode 11 (sixth control step).

As illustrated in FIG. 7, after time t12, the steam concentration at the inlet of the hydrogen electrode 11 decreases, and the air concentration at the inlet of the hydrogen electrode 11 increases, so that the steam concentration decreases to about atmospheric humidity and the air concentration reaches 100%. Since the temperature of the supplied air is lower than that of the steam in the system, the temperature Ta of the electrolysis module 19 gradually decreases. The time at which the temperature Ta reaches Temp12 is defined as time t13 (see FIG. 7).

In step S211, the control device 80 determines whether the temperature Ta of the electrolysis module 19 detected by the temperature sensor 17 falls below Temp12, and advances the process to step S212 in response to the temperature Ta falling below Temp12. Temp12 is a temperature of, for example, 50°C or lower.

In step S212, the control device 80 controls the regulation unit 50 to stop the supply of air to the hydrogen electrode 11 and the oxygen electrode 12. The control device 80 controls the air regulator valve 54 and the air-side discharge amount regulator valve 55 to be in the closed state. Further, the control device 80 controls the air regulator valve 57 to be in the closed state. By the above, the hydrogen production system 100 is brought into a stopped state.

The actions and effects exhibited by the hydrogen production system 100 of the present embodiment described above will now be described.

According to the hydrogen production system 100 of the present embodiment, the electrolysis module 19 electrolyzes steam supplied from the steam supply unit 20 to the hydrogen electrode 11, thereby generating hydrogen, which is stored in the hydrogen storage facility 40. When operating the electrolysis module 19, it is necessary to raise the temperature of the electrolysis module 19 to a temperature sufficient for steam electrolysis. However, during the temperature increase process of the electrolysis module 19, if steam is supplied to the hydrogen electrode 11 without applying an electric current and the temperature is raised without performing steam electrolysis, oxygen contained in the steam (water molecules) causes steam oxidation of the metal component included in the hydrogen electrode 11, and this tendency becomes more pronounced as the temperature increases.

Therefore, first, air is supplied from the air supply unit 70 to the hydrogen electrode 11 to increase the temperature of the electrolysis module 19 to a temperature equal to or lower than the first switching temperature (Temp 1). When the temperature of the electrolysis module 19 exceeds the first switching temperature (Temp1), the regulation unit 50 is controlled to switch the air supply state to the steam supply state. By switching at a temperature exceeding the first switching temperature, it is possible to prevent the supplied steam from condensing into drain water in the electrolysis module, thereby preventing corrosion of the hydrogen electrode 11 and the metal part of the electrolysis module.

Then, hydrogen is supplied to the hydrogen electrode 11. When the temperature of the electrolysis module 19 exceeds the second switching temperature (Temp2), the control device 80 controls the regulation unit 50 to switch from the steam supply state to the state in which hydrogen, a reducing gas, is mixed, in order to prevent steam oxidation. By switching from the steam supply state to the hydrogen-mixed state, the hydrogen electrode 11 is brought into a reducing atmosphere, so steam oxidation of the hydrogen electrode caused by oxygen contained in the steam is prevented.

Therefore, it is possible to prevent the hydrogen electrode 11 including the metal component from being damaged as compared with a case where the steam supply state is not switched to the state in which the reducing hydrogen is mixed. In addition, hydrogen used for preventing oxidation of the hydrogen electrode 11 is supplied to the hydrogen electrode 11 from the hydrogen storage facility 40 that stores hydrogen produced by the electrolysis module 19, and the supplied hydrogen is recovered again by the hydrogen separation facility.

Therefore, as compared with a case where a facility for supplying nitrogen gas or the like in order to prevent oxidation of the hydrogen electrode 11 is separately provided, it is possible to reduce the facility cost and the operation cost when producing hydrogen. Further, since oxygen is not present by replacing air in the vent gas flow path of the hydrogen electrode 11 with steam at the time of mixing hydrogen, safety can be secured.

According to the hydrogen production system 100 of the present embodiment, in response to the electrolysis module 19 falling below Temp10, the state in which hydrogen is supplied from the hydrogen storage facility 40 to the hydrogen electrode 11 is switched to the state in which hydrogen is not supplied to the hydrogen electrode 11 and steam is supplied from the steam supply unit 20 to the hydrogen electrode 11. Since hydrogen of the hydrogen electrode 11 is replaced with steam before air is supplied to the hydrogen electrode 11, occurrence of abnormal combustion or the like caused by mixing of air and hydrogen can be appropriately prevented.

According to the hydrogen production system 100 of the present embodiment, in response to the electrolysis module 19 falling below Temp11, which is lower than Temp10, the state in which air is not supplied from the air supply unit 70 to the hydrogen electrode 11 and steam is supplied from the steam supply unit 20 to the hydrogen electrode 11 is switched to the state in which air is supplied from the air supply unit 70 to the hydrogen electrode 11 and steam is not supplied from the steam supply unit 20 to the hydrogen electrode 11. Therefore, as compared with a case where the steam of the hydrogen electrode 11 is replaced with air at a temperature equal to or higher than Temp11, the hydrogen electrode 11 is less likely to be oxidized, and the hydrogen electrode 11 can be prevented from being damaged.

According to the hydrogen production system 100 of the present embodiment, since Temp2 and Temp10 are lower than the temperature at which the metal component included in the hydrogen electrode 11 is oxidized, it is possible to reliably prevent the hydrogen electrode 11 from being oxidized and damaged.

### Second Embodiment

Next, a hydrogen production system 100A according to a second embodiment of the present disclosure will be described. The hydrogen production system 100A of the present embodiment is a modification example of the hydrogen production system 100 of the first embodiment and has the same configuration as that of the first embodiment unless otherwise described below.

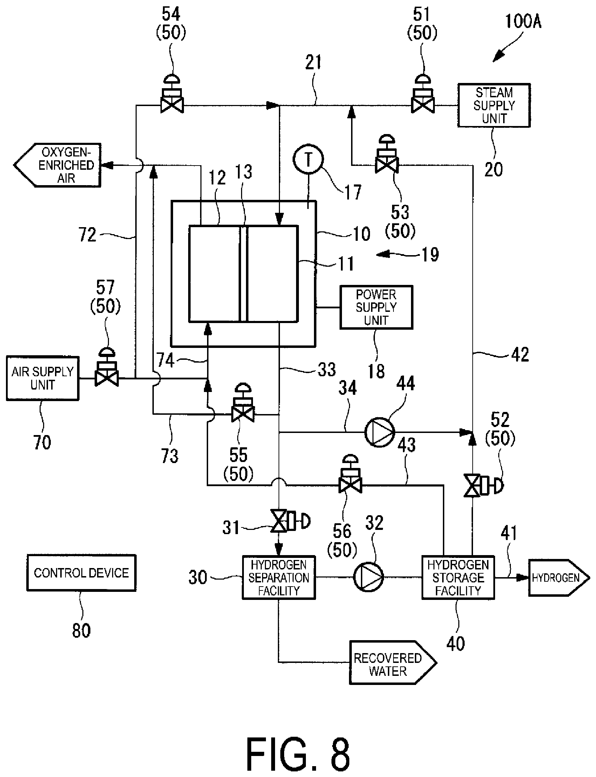

As illustrated in FIG. 8, the hydrogen production system 100A according to the present embodiment is different from the hydrogen production system 100 according to the first embodiment, in that it includes a diverging pipe 34 that causes hydrogen to diverge from the hydrogen discharge pipe 33 to the hydrogen supply pipe 42, and a recirculation blower 44 arranged in the diverging pipe 34.

The operation at the time of activation of the hydrogen production system 100A of the present embodiment is different from the operation at the time of activation of the hydrogen production system 100 of the first embodiment in the operation of step S106 in FIG. 3. In step S106 of the first embodiment, the control device 80 opens the hydrogen regulator valve 52 and switches the hydrogen regulator valve (or the gate valve) 53 from the closed state to the open state so as to start the supply of hydrogen from the hydrogen storage facility 40 to the hydrogen electrode 11. In addition, the open state of the hydrogen regulator valve 52 is maintained even after step S106.

On the other hand, after switching the hydrogen regulator valve 52 and the hydrogen regulator valve 53 from the closed state to the open state so as to start the supply of hydrogen from the hydrogen storage facility 40 to the hydrogen electrode 11, the control device 80 of the present embodiment switches the hydrogen regulator valve 52 from the open state to the closed state in response to a desired amount of hydrogen being supplied from the hydrogen storage facility 40 to the hydrogen supply pipe 42.

In response to the start of hydrogen supply from the hydrogen storage facility 40 to the hydrogen electrode 11, the control device 80 of the present embodiment operates the recirculation blower 44 to guide the hydrogen supplied from the hydrogen electrode 11 to the hydrogen discharge pipe 33 to the hydrogen supply pipe 42 via the diverging pipe 34. The hydrogen guided to the hydrogen supply pipe 42 is supplied to the hydrogen electrode 11 again. In this way, by operating the recirculation blower 44, hydrogen circulates through the hydrogen discharge pipe 33, the diverging pipe 34, the hydrogen supply pipe 42, the steam supply pipe 21, and the hydrogen electrode 11 in this order. At this time, the amount of hydrogen supplied to the hydrogen electrode 11 is controlled by flow rate control of the recirculation blower 44.

According to the hydrogen production system 100A of the present embodiment, when there is no need to change the flow rate and composition of the gas caused to flow through the base body tube 14 (hydrogen electrode 11) before the start of electrolysis, the entire amount of hydrogen supplied from the hydrogen electrode 11 to the hydrogen discharging pipe 33 is guided to the hydrogen electrode 11 again, and therefore there is no need to pass through the hydrogen separation facility 30 and the hydrogen storage facility 40. Therefore, power for cooling hydrogen and removing steam in the hydrogen separation facility 30 and power for heating hydrogen in the hydrogen storage facility 40 and supplying the hydrogen to the hydrogen supply pipe 42 are not required. Therefore, it is possible to reduce the power required to activate the hydrogen production system 100A.

### Third Embodiment

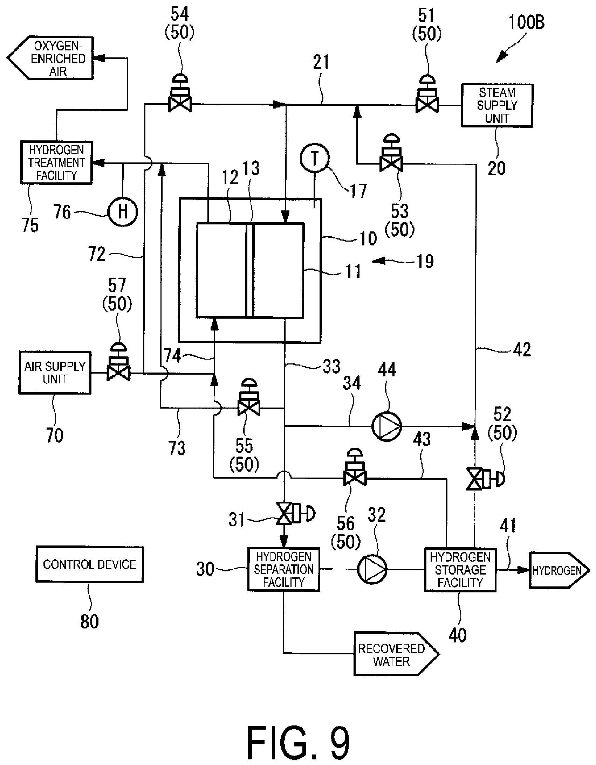

Next, a hydrogen production system 100B according to a third embodiment of the present disclosure will be described. The hydrogen production system 100B of the present embodiment is a modification example of the hydrogen production system 100A of the second embodiment and has the same configuration as that of the second embodiment unless otherwise described below. As illustrated in FIG. 9, the hydrogen production system 100B of the present embodiment is different from the hydrogen production system 100A of the second embodiment, in that it includes a hydrogen treatment facility 75 and a hydrogen concentration meter 76 in the heating medium discharge system of the electrolysis module 19.

The electrolysis module 19 has a structure in which hydrogen generated in the hydrogen electrode 11 or supplied to the hydrogen electrode 11 is not directly mixed with the heating medium (air) on the oxygen electrode 12 side, but hydrogen may leak from the hydrogen electrode 11 side to the oxygen electrode 12 side. Therefore, in the present embodiment, a treatment is performed so that hydrogen leaking from the hydrogen electrode 11 side to the oxygen electrode 12 side is not mixed with air discharged from the oxygen electrode 12 to the outside and is not discharged to the outside air.

The hydrogen treatment facility 75 is a facility that oxidizes mixed hydrogen to chemically change it into harmless water. An example of the hydrogen treatment facility 75 is a facility that has a hydrogen combustion catalyst therein and combusts hydrogen mixed in the air discharged from the oxygen electrode 12 and the air discharge pipe 73 by a catalytic reaction.

The hydrogen concentration meter 76 is a device that detects the concentration of hydrogen mixed in the air discharged from the oxygen electrode 12 and the air discharge pipe 73. When a measured value of the hydrogen concentration detected by the hydrogen concentration meter 76 exceeds a predetermined threshold concentration, the control device 80 causes the hydrogen treatment facility 75 to oxidize hydrogen mixed in the discharged air, chemically changing the hydrogen into harmless water.

Note that although FIG. 9 illustrates an example in which both the hydrogen treatment facility 75 and the hydrogen concentration meter 76 are provided, only the hydrogen concentration meter 76 may be provided without providing the hydrogen treatment facility 75. In this case, when the hydrogen concentration detected by the hydrogen concentration meter 76 exceeds a predetermined threshold concentration, the control device 80 increases the flow rate of air supplied to the oxygen electrode 12 by the air supply unit 70 so as to reduce the hydrogen concentration in the air that is discharged to the outside.

**In** addition, when the measured value of the hydrogen concentration detected by the hydrogen concentration meter 76 exceeds a predetermined threshold concentration, the control device 80 may reduce the current supplied to the electrolysis module so as to reduce the hydrogen concentration in the air that is discharged to the outside. **In** the above description, the predetermined threshold concentration is preferably set, for example, to one-fourth of the lower explosive limit concentration of hydrogen in the atmosphere.

Furthermore, when the control device 80 determines that the measured value of the hydrogen concentration detected by the hydrogen concentration meter 76 is so high that increasing the flow rate of the air supplied to the oxygen electrode 12 by the air supply unit 70 cannot reduce the hydrogen concentration to a safe concentration, the control device 80 may perform control to stop the operation of the hydrogen production system 100B.

In addition, in the present embodiment, when the temperature Ta of the electrolysis module 19 detected by the temperature sensor 17 exceeds a predetermined threshold temperature, the control device 80 may determine that an abnormality such as hydrogen leakage or damage to the electrolysis module 19 has occurred, and perform control to stop the operation of the hydrogen production system 100B. Additionally, instead of the temperature sensor 17, another temperature sensor may be provided at the inlet of the hydrogen treatment facility 75 or inside the hydrogen treatment facility 75, and when a temperature detected by this temperature sensor exceeds a predetermined threshold temperature, it may be determined that an abnormality such as hydrogen leakage or damage to the electrolysis module 19 has occurred, and control to stop the operation of the hydrogen production system 100B may be performed.

The hydrogen production system 1, which has been described in each of the embodiments described above, is understood as follows, for example.

A hydrogen production system (100) according to a first aspect of the present disclosure includes: an electrolysis module (19) including a hydrogen electrode (11), an oxygen electrode (12), and an electrolyte layer (13) arranged between the hydrogen electrode and the oxygen electrode, the electrolysis module (19) being configured to supply steam to the hydrogen electrode and produce hydrogen through steam electrolysis; a steam supply unit (20) configured to supply the steam to the hydrogen electrode; a hydrogen supply unit (40) configured to supply the hydrogen to the hydrogen electrode; a heating medium supply unit (70) configured to supply a heating medium to the oxygen electrode; a heating medium system (72) configured to supply the heating medium from the heating medium supply unit to the hydrogen electrode; and a hydrogen system (43) configured to supply the hydrogen from the hydrogen supply unit to the oxygen electrode.

With the hydrogen production system (100) according to the first aspect of the present disclosure, hydrogen is produced as the electrolysis module performs steam electrolysis on steam supplied from the steam supply unit. When activating the electrolysis module, steam is supplied from the steam supply unit to the hydrogen electrode in order to increase the temperature of the electrolysis module to a temperature sufficient for performing steam electrolysis on steam. As the temperature of the electrolysis module increases, the metal component included in the hydrogen electrode is steam-oxidized by oxygen contained in the steam (water molecules), and this tendency becomes more pronounced as the temperature increases. With the hydrogen production system according to the first aspect of the present disclosure, steam present at the hydrogen electrode is replaced with hydrogen through the supply of hydrogen from the hydrogen supply unit to the hydrogen electrode. Therefore, oxidation of the hydrogen electrode caused by oxygen contained in the steam can be prevented.

The hydrogen production system according to a second aspect of the present disclosure is the hydrogen production system of the first aspect further including the following configuration. That is, the hydrogen supply unit stores the hydrogen produced by the electrolysis module and supplies the hydrogen to the hydrogen electrode and the oxygen electrode.

With the hydrogen production system according to the second aspect of the present disclosure, hydrogen used to prevent oxidation of the hydrogen electrode is supplied to the hydrogen electrode from the hydrogen supply unit that stores hydrogen produced by the electrolysis module. Therefore, as compared with a case where a separate facility is provided to supply an inert gas such as nitrogen gas so as to prevent oxidation of the hydrogen electrode, the operation cost when producing the inert gas is not increased.

The hydrogen production system according to a third aspect of the present disclosure is the hydrogen production system of the first or second aspect further including the following configuration. That is, there is provided a regulation unit (50) configured to regulate a supply amount of the hydrogen supplied from the hydrogen supply unit to the hydrogen electrode, a supply amount of the hydrogen supplied from the hydrogen supply unit to the oxygen electrode, a supply amount of the steam supplied from the steam supply unit to the hydrogen electrode, a supply amount of the heating medium supplied from the heating medium supply unit to the oxygen electrode, and a supply amount of the heating medium supplied from the heating medium supply unit to the hydrogen electrode.

With the hydrogen production system according to the third aspect of the present disclosure, the supply amount of hydrogen supplied to the hydrogen electrode, the supply amount of hydrogen supplied to the oxygen electrode, the supply amount of steam supplied to the hydrogen electrode, the supply amount of heating medium supplied to the oxygen electrode, and the supply amount of heating medium supplied to the hydrogen electrode are regulated by the regulation unit, enabling appropriate production of hydrogen through steam electrolysis while preventing damage to the hydrogen electrode.

The hydrogen production system according to a fourth aspect of the present disclosure is the hydrogen production system of the third aspect further including the following configuration. That is, when activating the electrolysis module, the regulation unit, in response to the electrolysis module exceeding a first switching temperature (Temp1), switches a state in which the heating medium is supplied from the heating medium supply unit to the hydrogen electrode and the steam is not supplied from the steam supply unit to the hydrogen electrode to a state in which the heating medium is not supplied from the heating medium supply unit to the hydrogen electrode and the steam is supplied from the steam supply unit to the hydrogen electrode.

With the hydrogen production system according to the fourth aspect of the present disclosure, the heating medium present at the hydrogen electrode is replaced with steam in response to the electrolysis module exceeding the first switching temperature. Since the heating medium is replaced with steam before hydrogen is supplied to the hydrogen electrode, for example, when the heating medium is a medium (air or the like) containing oxygen, occurrence of abnormal combustion or the like caused by mixing of the heating medium and hydrogen can be appropriately prevented.

The hydrogen production system according to a fifth aspect of the present disclosure is the hydrogen production system of the fourth aspect further including the following configuration. That is, when activating the electrolysis module, the regulation unit, in response to the electrolysis module exceeding a second switching temperature (Temp2) higher than the first switching temperature, switches a state in which the hydrogen is not supplied from the hydrogen supply unit to the hydrogen electrode to a state in which the hydrogen is supplied from the hydrogen supply unit to the hydrogen electrode.

With the hydrogen production system according to the fifth aspect of the present disclosure, steam present at the hydrogen electrode is replaced with hydrogen in response to the electrolysis module exceeding the second switching temperature. Since the steam present at the hydrogen electrode is gradually replaced with hydrogen, which is a reducing gas, bringing the hydrogen electrode into a reducing atmosphere, it is possible to appropriately prevent steam oxidation of the hydrogen electrode caused by oxygen contained in the steam.

The hydrogen production system according to a sixth aspect of the present disclosure is the hydrogen production system of the fifth aspect further including the following configuration. That is, when activating the electrolysis module, the regulation unit, in response to the electrolysis module exceeding a third switching temperature (Temp3), switches a state in which the hydrogen is not supplied to the oxygen electrode via the hydrogen system to a state in which the hydrogen is supplied to the oxygen electrode via the hydrogen system.

With the hydrogen production system according to the sixth aspect of the present disclosure, hydrogen is supplied to the oxygen electrode in response to the electrolysis module exceeding the third switching temperature, the hydrogen is combusted through catalysis of the oxygen electrode, the temperature on the oxygen electrode side of the electrolysis module can be increased, and the temperature of the entire electrolysis module can be raised.

The hydrogen production system according to a seventh aspect of the present disclosure is the hydrogen production system of the sixth aspect further including the following configuration. That is, when activating the electrolysis module, the regulation unit, in response to the electrolysis module exceeding a fourth switching temperature (Temp4) higher than the third switching temperature, increases the supply amount of the steam supplied from the steam supply unit to the hydrogen electrode.

With the hydrogen production system according to the seventh aspect of the present disclosure, since the supply amount of the steam supplied to the hydrogen electrode increases in response to the electrolysis module exceeding the fourth switching temperature, it is possible to compensate for the steam reduced by the steam electrolysis reaction and appropriately promote the steam electrolysis reaction.

The hydrogen production system according to an eighth aspect of the present disclosure is the hydrogen production system of the fifth aspect further including the following configuration. That is, when stopping the electrolysis module, the regulation unit, in response to the electrolysis module falling below the fifth switching temperature (Temp10), switches a state in which the hydrogen is supplied from the hydrogen supply unit to the hydrogen electrode to a state in which the hydrogen is not supplied from the hydrogen supply unit to the hydrogen electrode.

With the hydrogen production system according to the eighth aspect of the present disclosure, the state in which hydrogen is supplied from the hydrogen supply unit to the hydrogen electrode can be switched to the state in which hydrogen is not supplied to the hydrogen electrode, in response to the electrolysis module falling below the fifth switching temperature. Since hydrogen of the hydrogen electrode is replaced with another medium before the heating medium is supplied to the hydrogen electrode, for example, when the heating medium is a medium (air or the like) containing oxygen, occurrence of abnormal combustion or the like caused by mixing of the heating medium and hydrogen can be appropriately prevented.

The hydrogen production system according to a ninth aspect of the present disclosure is the hydrogen production system of the eighth aspect wherein when stopping the electrolysis module, the regulation unit, in response to the electrolysis module falling below a sixth switching temperature (Temp11) lower than the fifth switching temperature, switches a state in which the heating medium is not supplied from the heating medium supply unit to the hydrogen electrode and the steam is supplied from the steam supply unit to the hydrogen electrode to a state in which the heating medium is supplied from the heating medium supply unit to the hydrogen electrode and the steam is not supplied from the steam supply unit to the hydrogen electrode.

With the hydrogen production system according to the ninth aspect of the present disclosure, steam of the hydrogen electrode is replaced with the heating medium in response to the electrolysis module falling below the sixth switching temperature lower than the fifth switching temperature. Therefore, when oxygen is contained in the heating medium, the hydrogen electrode is less likely to be oxidized as compared with a case where steam of the hydrogen electrode is replaced with the heating medium at a temperature equal to or higher than the fifth switching temperature, and the hydrogen electrode can be prevented from being damaged.

The hydrogen production system according to a tenth aspect of the present disclosure is the hydrogen production system of the fourth aspect, wherein the first switching temperature is a temperature higher than a dew point of the steam in the hydrogen electrode. The hydrogen production system according to an eleventh aspect of the present disclosure is the hydrogen production system of the ninth aspect, wherein the sixth switching temperature is a temperature higher than a dew point of the steam in the hydrogen electrode.

With the hydrogen production system according to the tenth aspect and the eleventh aspect of the present disclosure, since the first switching temperature and the sixth switching temperature are higher than the dew point of steam in the hydrogen electrode, steam supplied to the hydrogen electrode can be appropriately prevented from condensing to generate drain water.

The hydrogen production system according to a twelfth aspect of the present disclosure is the hydrogen production system of the fifth aspect, wherein the second switching temperature is a temperature lower than a temperature at which a metal component included in the hydrogen electrode is oxidized.

With the hydrogen production system according to the twelfth aspect of the present disclosure, steam is replaced with hydrogen at a temperature lower than a temperature at which the metal component included in the hydrogen electrode is oxidized. Therefore, the metal component included in the hydrogen electrode can be appropriately prevented from being oxidized by steam.

The hydrogen production system according to a thirteenth aspect of the present disclosure is the hydrogen production system of the eighth aspect, wherein the fifth switching temperature is a temperature lower than a temperature at which a metal component included in the hydrogen electrode is oxidized.

With the hydrogen production system according to the thirteenth aspect of the present disclosure, steam is replaced with hydrogen at a temperature lower than a temperature at which the metal component included in the hydrogen electrode is oxidized. Therefore, the metal component included in the hydrogen electrode can be appropriately prevented from being oxidized by steam.

The hydrogen production system according to a fourteenth aspect of the present disclosure is the hydrogen production system of the seventh aspect, wherein the fourth switching temperature is a temperature higher than a temperature at which the electrolysis module can produce the hydrogen through the steam electrolysis.

With the hydrogen production system according to the fourteenth aspect of the present disclosure, since the supply amount of steam is increased in response to the electrolysis module exceeding the fourth switching temperature higher than the temperature at which the electrolysis module can produce hydrogen through steam electrolysis, the amount of steam of the hydrogen electrode can be prevented from excessively increasing.

The hydrogen production system according to a fifteenth aspect of the present disclosure is the hydrogen production system of the first or second aspect including a hydrogen concentration meter and a hydrogen treatment facility arranged in a heating medium discharge system of the electrolysis module.

With the hydrogen production system according to the fifteenth aspect of the present disclosure, the hydrogen concentration can be detected by the hydrogen concentration meter arranged in the heating medium discharge system, and the hydrogen can be appropriately treated by the hydrogen treatment facility.

In a method for controlling a hydrogen production system according to a sixteenth aspect of the present disclosure, the hydrogen production system includes: an electrolysis module including a hydrogen electrode including an metal component, an oxygen electrode, and an electrolyte layer arranged between the hydrogen electrode and the oxygen electrode, the electrolysis module being configured to supply steam to the hydrogen electrode and produce hydrogen through steam electrolysis; a steam supply unit configured to supply the steam to the hydrogen electrode; a hydrogen supply unit configured to supply the hydrogen to the hydrogen electrode; a heating medium supply unit configured to supply a heating medium to the oxygen electrode; a heating medium system configured to supply the heating medium from the heating medium supply unit to the hydrogen electrode; a hydrogen system configured to supply the hydrogen from the hydrogen supply unit to the oxygen electrode; and a regulation unit configured to regulate a supply amount of the hydrogen supplied from the hydrogen supply unit to the hydrogen electrode, a supply amount of the hydrogen supplied from the hydrogen supply unit to the oxygen electrode, a supply amount of the steam supplied from the steam supply unit to the hydrogen electrode, a supply amount of the heating medium supplied from the heating medium supply unit to the oxygen electrode, and a supply amount of the heating medium supplied from the heating medium supply unit to the hydrogen electrode, the method includes a first control step of, in response to the electrolysis module exceeding a first switching temperature when activating the electrolysis module, controlling the regulation unit to switch a state in which the heating medium is supplied from the heating medium supply unit to the hydrogen electrode and the steam is not supplied from the steam supply unit to the hydrogen electrode to a state in which the heating medium is not supplied from the heating medium supply unit to the hydrogen electrode and the steam is supplied from the steam supply unit to the hydrogen electrode.

With the method for controlling the hydrogen production system according to the sixteenth aspect of the present disclosure, the first control step involves supplying steam supplied from the steam supply unit to the hydrogen electrode in response to the electrolysis module exceeding the first switching temperature, when activating the electrolysis module, thereby replacing the heating medium present at the hydrogen electrode with steam. Thus, when the heating medium is a medium (air or the like) containing oxygen, oxidation of the hydrogen electrode caused by oxygen in the heating medium at a relatively low temperature higher than the first switching temperature can be prevented.

**In** addition, since the heating medium is replaced with steam before hydrogen is supplied to the hydrogen electrode, for example, when the heating medium is a medium (air or the like) containing oxygen, occurrence of abnormal combustion or the like caused by mixing of the heating medium and hydrogen can be appropriately prevented.

The method for controlling the hydrogen production system of a seventeenth aspect of the present disclosure is the method of the sixteenth aspect including a second control step of, in response to the electrolysis module exceeding a second switching temperature higher than the first switching temperature when activating the electrolysis module, controlling the regulation unit to switch a state in which the hydrogen is not supplied from the hydrogen supply unit to the hydrogen electrode to a state in which the hydrogen is supplied from the hydrogen supply unit to the hydrogen electrode.

With the method for controlling the hydrogen production system according to the seventeenth aspect of the present disclosure, steam present at the hydrogen electrode is replaced with hydrogen in response to the electrolysis module exceeding the second switching temperature. Since the steam present at the hydrogen electrode is gradually replaced with hydrogen, which is a reducing gas, bringing the hydrogen electrode into a reducing atmosphere, it is possible to appropriately prevent steam oxidation of the hydrogen electrode caused by oxygen contained in the steam.

The method for controlling the hydrogen production system according to an eighteenth aspect of the present disclosure is the method of the seventeenth aspect including a third control step of, in response to the electrolysis module exceeding a third switching temperature when activating the electrolysis module, controlling the regulation unit to switch a state in which the hydrogen is not supplied to the oxygen electrode via the hydrogen system to a state in which the hydrogen is supplied to the oxygen electrode via the hydrogen system.

With the method for controlling the hydrogen production system according to the eighteenth aspect of the present disclosure, hydrogen is supplied to the oxygen electrode in response to the electrolysis module exceeding the third switching temperature, the hydrogen is combusted through catalysis of the oxygen electrode, the temperature on the oxygen electrode side of the electrolysis module is increased, and the temperature of the entire electrolysis module can be raised.

The method for controlling the hydrogen production system according to a nineteenth aspect of the present disclosure is the method of the eighteenth aspect including a fourth control step of, in response to the electrolysis module exceeding a fourth switching temperature higher than the third switching temperature when activating the electrolysis module, controlling the regulation unit to increase the supply amount of the steam supplied from the steam supply unit to the hydrogen electrode.

With the method for controlling the hydrogen production system according to the nineteenth aspect of the present disclosure, since the supply amount of steam supplied to the hydrogen electrode increases in response to the electrolysis module exceeding the fourth switching temperature, the supply steam concentration can be adjusted to be suitable for the steam electrolysis reaction, and the steam electrolysis reaction can be appropriately performed.

The method for controlling the hydrogen production system according to a twentieth aspect of the present disclosure is the method of the seventeenth aspect including a fifth control step of, in response to the electrolysis module falling below the fifth switching temperature when stopping the electrolysis module, controlling the regulation unit to switch a state in which the hydrogen is supplied from the hydrogen supply unit to the hydrogen electrode to a state in which the hydrogen is not supplied from the hydrogen supply unit to the hydrogen electrode.

With the method for controlling the hydrogen production system according to the twentieth aspect of the present disclosure, the state in which hydrogen is supplied from the hydrogen supply unit is switched to the state in which hydrogen is not supplied to the hydrogen electrode, in response to the electrolysis module falling below the fifth switching temperature. Therefore, since hydrogen of the hydrogen electrode is replaced with another medium before the heating medium is supplied to the hydrogen electrode, for example, when the heating medium is a medium (air or the like) containing oxygen, occurrence of abnormal combustion or the like caused by mixing of the heating medium and hydrogen can be appropriately prevented.

The method for controlling the hydrogen production system according to a twenty-first aspect of the present disclosure is the method of the twentieth aspect including a sixth control step of, in response to the electrolysis module falling below a sixth switching temperature lower than the fifth switching temperature when stopping the electrolysis module, controlling the regulation unit to switch a state in which the heating medium is not supplied from the heating medium supply unit to the hydrogen electrode and the steam is supplied from the steam supply unit to the hydrogen electrode to a state in which the heating medium is supplied from the heating medium supply unit to the hydrogen electrode and the steam is not supplied from the steam supply unit to the hydrogen electrode.

With the method for controlling the hydrogen production system according to the twenty-first aspect of the present disclosure, steam of the hydrogen electrode is replaced with the heating medium in response to the electrolysis module falling below the sixth switching temperature lower than the fifth switching temperature. Therefore, when oxygen is contained in the heating medium, the hydrogen electrode is less likely to be oxidized as compared with a case where steam of the hydrogen electrode is replaced with the heating medium at a temperature equal to or higher than the fifth switching temperature, and the hydrogen electrode can be prevented from being damaged.

In addition, with the method for controlling the hydrogen production system according to the twenty-first aspect of the present disclosure, the medium flowing through the electrolysis module is only the heating medium, and even when the electrolysis module is cooled and the temperature decreases, it is possible to prevent condensation of steam inside the electrolysis module.

### Reference Signs List

10 Electrolysis cell
11 Hydrogen electrode
12 Oxygen electrode
13 Electrolyte layer
14 Base body tube
15 Interconnector
16 Lead film
17 Temperature sensor
18 Power supply unit
19 Electrolysis module
20 Steam supply unit
21 Steam supply pipe
30 Hydrogen separation facility
31 Hydrogen supply valve
32 Hydrogen booster
33 Hydrogen discharge pipe
34 Diverging pipe
40 Hydrogen storage facility (hydrogen supply unit)
41 Hydrogen supply pipe
42 Hydrogen supply pipe
43 Hydrogen supply pipe (hydrogen system)
44 Recirculation blower
50 Regulation unit
51 Steam regulator valve
52 Hydrogen regulator valve
53 Hydrogen regulator valve (or gate valve)
54 Air regulator valve
55 Air-side discharge amount regulator valve for hydrogen electrode vent gas
56 Hydrogen supply valve
57 Air regulator valve
70 Air supply unit
72 Air supply pipe (heating medium system)
73 Air discharge pipe
74 Air supply pipe
75 Hydrogen treatment facility
76 Hydrogen concentration meter
80 Control device (control unit)
100, 100A, 100B Hydrogen production system
Ta Temperature of electrolysis module

## Claims

1. A hydrogen production system comprising:
an electrolysis module being an assembly of electrolysis cells comprising a hydrogen electrode, an oxygen electrode, and an electrolyte layer arranged between the hydrogen electrode and the oxygen electrode, the electrolysis module being configured to supply steam to the hydrogen electrode and produce hydrogen through steam electrolysis;
a steam supply unit configured to supply the steam to the hydrogen electrode;
a hydrogen supply unit configured to supply the hydrogen to the hydrogen electrode;
a heating medium supply unit configured to supply a heating medium to the oxygen electrode;
a heating medium system configured to supply the heating medium from the heating medium supply unit to the hydrogen electrode; and
a hydrogen system configured to supply the hydrogen from the hydrogen supply unit to the oxygen electrode.

2. The hydrogen production system according to claim 1, wherein the hydrogen supply unit stores the hydrogen produced by the electrolysis module and supplies the hydrogen to the hydrogen electrode and the oxygen electrode.

3. The hydrogen production system according to claim 1 or 2, comprising a regulation unit configured to regulate a supply amount of the hydrogen supplied from the hydrogen supply unit to the hydrogen electrode, a supply amount of the hydrogen supplied from the hydrogen supply unit to the oxygen electrode, a supply amount of the steam supplied from the steam supply unit to the hydrogen electrode, a supply amount of the heating medium supplied from the heating medium supply unit to the oxygen electrode, and a supply amount of the heating medium supplied from the heating medium supply unit to the hydrogen electrode.

4. The hydrogen production system according to claim 3, wherein when activating the electrolysis module, the regulation unit, in response to the electrolysis module exceeding a first switching temperature, a state in which the heating medium is supplied from the heating medium supply unit to the hydrogen electrode and the steam is not supplied from the steam supply unit to the hydrogen electrode to a state in which the heating medium is not supplied from the heating medium supply unit to the hydrogen electrode and the steam is supplied from the steam supply unit to the hydrogen electrode.

5. The hydrogen production system according to claim 4, wherein when activating the electrolysis module, the regulation unit, in response to the electrolysis module exceeding a second switching temperature higher than the first switching temperature, switches a state in which the hydrogen is not supplied from the hydrogen supply unit to the hydrogen electrode to a state in which the hydrogen is supplied from the hydrogen supply unit to the hydrogen electrode.

6. The hydrogen production system according to claim 5, wherein when activating the electrolysis module, the regulation unit, in response to the electrolysis module exceeding a third switching temperature, switches a state in which the hydrogen is not supplied to the oxygen electrode via the hydrogen system to a state in which the hydrogen is supplied to the oxygen electrode via the hydrogen system.

7. The hydrogen production system according to claim 6, wherein when activating the electrolysis module, the regulation unit, in response to the electrolysis module exceeding a fourth switching temperature higher than the third switching temperature, increases the supply amount of the steam supplied from the steam supply unit to the hydrogen electrode.

8. The hydrogen production system according to claim 5, wherein when stopping the electrolysis module, the regulation unit, in response to the electrolysis module falling below a fifth switching temperature, switches a state in which the hydrogen is supplied from the hydrogen supply unit to the hydrogen electrode to a state in which the hydrogen is not supplied from the hydrogen supply unit to the hydrogen electrode.

9. The hydrogen production system according to claim 8, wherein when stopping the electrolysis module, the regulation unit, in response to the electrolysis module falling below a sixth switching temperature lower than the fifth switching temperature, switches a state in which the heating medium is not supplied from the heating medium supply unit to the hydrogen electrode and the steam is supplied from the steam supply unit to the hydrogen electrode to a state in which the heating medium is supplied from the heating medium supply unit to the hydrogen electrode and the steam is not supplied from the steam supply unit to the hydrogen electrode.

10. The hydrogen production system according to claim 4, wherein the first switching temperature is a temperature higher than a dew point of the steam in the hydrogen electrode.

11. The hydrogen production system according to claim 9, wherein the sixth switching temperature is a temperature higher than a dew point of the steam in the hydrogen electrode.

12. The hydrogen production system according to claim 5, wherein the second switching temperature is a temperature lower than a temperature at which a metal component included in the hydrogen electrode is oxidized.

13. The hydrogen production system according to claim 8, wherein the fifth switching temperature is a temperature lower than a temperature at which a metal component included in the hydrogen electrode is oxidized.

14. The hydrogen production system according to claim 7, wherein the fourth switching temperature is a temperature higher than a temperature at which the electrolysis module can produce the hydrogen through the steam electrolysis.

15. The hydrogen production system according to claim 1 or 2, comprising a hydrogen concentration meter and a hydrogen treatment facility arranged in a heating medium discharge system of the electrolysis module.

16. A method for controlling a hydrogen production system, the hydrogen production system comprising:
an electrolysis module comprising a hydrogen electrode, an oxygen electrode, and an electrolyte layer arranged between the hydrogen electrode and the oxygen electrode, the electrolysis module being configured to supply steam to the hydrogen electrode and produce hydrogen through steam electrolysis;
a steam supply unit configured to supply the steam to the hydrogen electrode;
a hydrogen supply unit configured to supply the hydrogen to the hydrogen electrode;
a heating medium supply unit configured to supply a heating medium to the oxygen electrode;
a heating medium system configured to supply the heating medium from the heating medium supply unit to the hydrogen electrode;
a hydrogen system configured to supply the hydrogen from the hydrogen supply unit to the oxygen electrode; and
a regulation unit configured to regulate a supply amount of the hydrogen supplied from the hydrogen supply unit to the hydrogen electrode, a supply amount of the hydrogen supplied from the hydrogen supply unit to the oxygen electrode, a supply amount of the steam supplied from the steam supply unit to the hydrogen electrode, a supply amount of the heating medium supplied from the heating medium supply unit to the oxygen electrode, and a supply amount of the heating medium supplied from the heating medium supply unit to the hydrogen electrode,
the method comprising a first control step of, in response to the electrolysis module exceeding a first switching temperature when activating the electrolysis module, controlling the regulation unit to switch a state in which the heating medium is supplied from the heating medium supply unit to the hydrogen electrode and the steam is not supplied from the steam supply unit to the hydrogen electrode to a state in which the heating medium is not supplied from the heating medium supply unit to the hydrogen electrode and the steam is supplied from the steam supply unit to the hydrogen electrode.

17. The method for controlling the hydrogen production system according to claim 16, comprising a second control step of, in response to the electrolysis module exceeding a second switching temperature higher than the first switching temperature when activating the electrolysis module, controlling the regulation unit to switch a state in which the hydrogen is not supplied from the hydrogen supply unit to the hydrogen electrode to a state in which the hydrogen is supplied from the hydrogen supply unit to the hydrogen electrode.

18. The method for controlling the hydrogen production system according to claim 17, comprising a third control step of, in response to the electrolysis module exceeding a third switching temperature when activating the electrolysis module, controlling the regulation unit to switch a state in which the hydrogen is not supplied to the oxygen electrode via the hydrogen system to a state in which the hydrogen is supplied to the oxygen electrode via the hydrogen system.

19. The method for controlling the hydrogen production system according to claim 18, comprising a fourth control step of, in response to the electrolysis module exceeding a fourth switching temperature higher than the third switching temperature when activating the electrolysis module, controlling the regulation unit to increase the supply amount of the steam supplied from the steam supply unit to the hydrogen electrode.

20. The method for controlling the hydrogen production system according to claim 17, comprising a fifth control step of, in response to the electrolysis module falling below the fifth switching temperature when stopping the electrolysis module, controlling the regulation unit to switch a state in which the hydrogen is supplied from the hydrogen supply unit to the hydrogen electrode to a state in which the hydrogen is not supplied from the hydrogen supply unit to the hydrogen electrode.

21. The method for controlling the hydrogen production system according to claim 20, comprising a sixth control step of, in response to the electrolysis module falling below a sixth switching temperature lower than the fifth switching temperature when stopping the electrolysis module, controlling the regulation unit to switch a state in which the heating medium is not supplied from the heating medium supply unit to the hydrogen electrode and the steam is supplied from the steam supply unit to the hydrogen electrode to a state in which the heating medium is supplied from the heating medium supply unit to the hydrogen electrode and the steam is not supplied from the steam supply unit to the hydrogen electrode.

22. The method for controlling the hydrogen production system according to claim 16, comprising subjecting the hydrogen included in a heating medium discharge system of the electrolysis module to a combustion treatment by a hydrogen treatment facility arranged in the heating medium discharge system, in response to a measured value of a hydrogen concentration meter arranged in the heating medium discharge system exceeding a preset threshold concentration.

23. The method for controlling the hydrogen production system according to claim 16, comprising reducing an amount of current supplied to the electrolysis module or stopping the current, in response to a measured value of a hydrogen concentration meter arranged in a heating medium discharge system of the electrolysis module exceeding a preset threshold concentration.

24. The method for controlling the hydrogen production system according to claim 16, comprising increasing a supply amount of the heating medium supplied to the electrolysis module, in response to a measured value of a hydrogen concentration meter arranged in a heating medium discharge system of the electrolysis module exceeding a preset threshold concentration.

25. The method for controlling the hydrogen production system according to any one of claims 22 to 24, comprising setting the threshold concentration to one-fourth of a lower explosive limit concentration of the hydrogen in the atmosphere.
